# EUROPÄISCHE PATENTANMELDUNG

(11) **EP 0 588 089 A1**
(43) Veröffentlichungstag der Anmeldung: **23.03.1994**
(21) Anmeldenummer: 93113226.0
(22) Anmeldetag: 18.08.1993
(51) Int. Cl.: F16L 11/08, F16L 55/033

(54) **Schaumstoffschlauch mit Drahtwendelverstärkung**

(30) Priorität: 15.09.1992 DE 4230823
(71) Anmelder: ALCAN DEUTSCHLAND GMBH, D-37075 Göttingen (DE)
(72) Erfinder: Nennstiel, Jens-Uwe, D-58791 Werdohl (DE); Werner, Friedrich, D-58840 Plettenberg (DE)
(74) Vertreter: Eitle, Werner, Dipl.-Ing.

(57) **Zusammenfassung**

Schaumstoffschlauch mit Drahtwendelverstärkung, insbesondere zum Ansaugen von Luft für Maschinen und Motoren, mit einer Schaumstoffhülle (1) und einer in das Material der Schaumstoffhülle (1) eingeschmolzenen Drahtwendel (2). Die Schaumstoffhülle ist von einer Außenhaut (3) eingefaßt.

## Beschreibung

Die Erfindung betrifft einen Schaumstoffschlauch mit Drahtwendelverstärkung nach dem Oberbegriff des Anspruchs 1.

Derartige Schläuche werden insbesondere als Luftzufuhrschläuche verwendet, um Maschinen oder Motoren Luft zuzuführen und gleichzeitig die Luftansauggeräusche zu dämpfen. Da durch das Ansaugen von Luft im Schlauch ein Unterdruck entsteht und die Schläuche beim Verlegen in engen Motor- oder Maschinenräumen häufig stark gebogen werden müssen, besteht die Gefahr, daß der Schlauch zusammengedrückt wird. Zur Verhinderung eines Eindrückens des Schlauchquerschnitts müssen derartige Schläuche deshalb mit Versteifungen ausgerüstet sein.

Ein Schaumstoffschlauch mit Drahtwendelverstärkung ist beispielsweise aus der EP 0 318 636 bekannt. Bei diesem Schlauch, der insbesondere zum Ansaugen von Luft in einen Luftfilter beispielsweise bei Kraftfahrzeugmotoren dient, ist eine kunststoffummantelte Drahtwendel mit einem Netzlaminat aus kunststoffbeschichteten Glasfasern verschweißt und die Drahtwendel und das Netzlaminat sind von einem schallabsorbierenden Kunststoffschlauch umhüllt, der wiederum von einer PUR-Haut umgeben ist. Das Netzlaminat soll dafür sorgen, daß die Drahtwendel auch bei scharfen Biegungen keinen Querschnittsverlust erleidet.

Weiterhin beschreibt die DE-OS-27 49 665 einen schalldämmenden, flexiblen Schlauch, bei dem eine kunststoffbeschichtete Drahtwendel mit einem Netzgewebe umgeben ist und die Drahtwendel und das Netzgewebe von einem Schaumstoff umhüllt sind, der eine geschlossene, dichte Außenschicht aufweist.

Diese bekannten Schaumstoffschläuche haben den Nachteil, daß sie viel Materialaufwand erfordern und aufwendig zu fertigen sind, da ein Netzlaminat bzw. Netzgewebe erforderlich ist, das zur Verbindung der Drahtwendel mit der Innenwandung der Schaumstoffhülle zwischen diese beiden Teile eingesetzt werden muß. Ferner ist nachteilig, daß das Eindringen des Schalls in das Dämmaterial der Schaumstoffhülle durch die Drahtwendel und das Netzgewebe behindert wird und dadurch die Schallabsorption beeinträchtigt wird. Zudem führen auftretende Vibrationen bei bekannten Schaumstoffschläuchen zu einem Abschaben der Innenwandung der Schaumstoffhülle durch die daran anliegende Drahtwendel.

Der Erfindung liegt die Aufgabe zugrunde, einen luftführenden Schlauch mit hoher Schalldämmung und großer Biegefestigkeit zu schaffen, bei dem die genannten Nachteile bekannter Schaumstoffschläuche vermieden sind und der mit geringem Aufwand und geringem Materialverbrauch herstellbar ist.

Diese Aufgabe wird von dem erfindungsgemäßen Schaumstoffschlauch mit Drahtwendelverstärkung durch die Merkmale des Anspruchs 1 gelöst. Vorteilhafte Ausgestaltungen sind Gegenstand der Unteransprüche.

Da im Gegensatz zu den bekannten Schaumstoffschläuchen mit Drahtwendelverstärkung kein Netzgewebe oder Netzlaminat zwischen der Drahtwendel und der Schaumstoffhülle vorgesehen ist und auch die Drahtwendel selbst nicht an der Innenwandung der Schaumstoffhülle anliegt, sondern in den Schaumstoff eingeschmolzen ist, kann der Schall ungehindert in den Schaumstoff eindringen. Dadurch wird eine verbesserte Schallabsorption erreicht.

Nachdem kein Netzgewebe oder Netzlaminat vorgesehen ist, kommt der erfindungsgemäße Schaumstoffschlauch im Gegensatz zu bekannten Schaumstoffschläuchen mit weniger Material aus und es können dementsprechend sowohl die Materialkosten als auch die Fertigungskosten für ein Netzgewebe oder Netzlaminat eingespart werden.

Da auch ein Verschweißen der Drahtwendel mit einem Netzlaminat entfällt und eine Kunststoffbeschichtung der Drahtwendel nicht erforderlich ist, ist der erfindungsgemäße Schaumstoffschlauch gegenüber bekannten Lösungen mit weniger Aufwand zu fertigen.

Beim erfindungsgemäßen Schaumstoffschlauch kann es zu keinem Abschaben der Innenoberfläche der Schaumstoffhülle infolge von Vibrationen kommen, so wie dies bei bekannten Konstruktionen der Fall ist, bei denen die Drahtwendel und das Netzgewebe an der Innenfläche der Schaumstoffhülle anliegen.

In einer bevorzugten Ausführungsform ist die Drahtwendel unmittelbar hinter der Innenwandung der Schaumstoffhülle angeordnet.

In einer weiteren bevorzugten Ausführungsform ist die Drahtwendel etwa in der Mitte zwischen der Innenwandung und der Außenfläche der Schaumstoffhülle angeordnet.

Vorteilhafte Ausgestaltungen der Erfindung bestehen darin, die Drahtwendel aus Stahldraht herzustellen und die Außenfläche der Schaumstoffhülle mit einer Außenhaut einzufassen.

Mit der vorliegendne Erfindung steht somit ein Schaumstoffschlauch mit Drahtwendelverstärkung zur Verfügung, der ein verbessertes Schalldämmungsverhalten zeigt und gleichzeitig eine hohe Biegefestigkeit durch die Drahtwendelverstärkung aufweist, der sowohl mit weniger Aufwand als auch mit geringerem Materialverbrauch gegenüber bekannten Konstruktionen herstellbar ist und der eine höhere Lebensdauer als bekannte Ausführungen aufweist, da kein Abschaben der Innenwandung der Schaumstoffhülle durch die Drahtwendel bei auftretenden Vibrationen erfolgen kann.

Im folgenden wird eine bevorzugte Ausführungsform der Erfindung beispielhaft anhand der beigefügten Zeichnungen näher erläutert.

Es zeigen:
- Fig. 1: eine erste bevorzugte Ausführungsform des erfindungsgemäßen Schaumstoffschlauchs im Längsschnitt;
- Fig. 2: eine zweite bevorzugte Ausführungsform des erfindungsgemäßen Schaumstoffschlauchs im Längsschnitt.

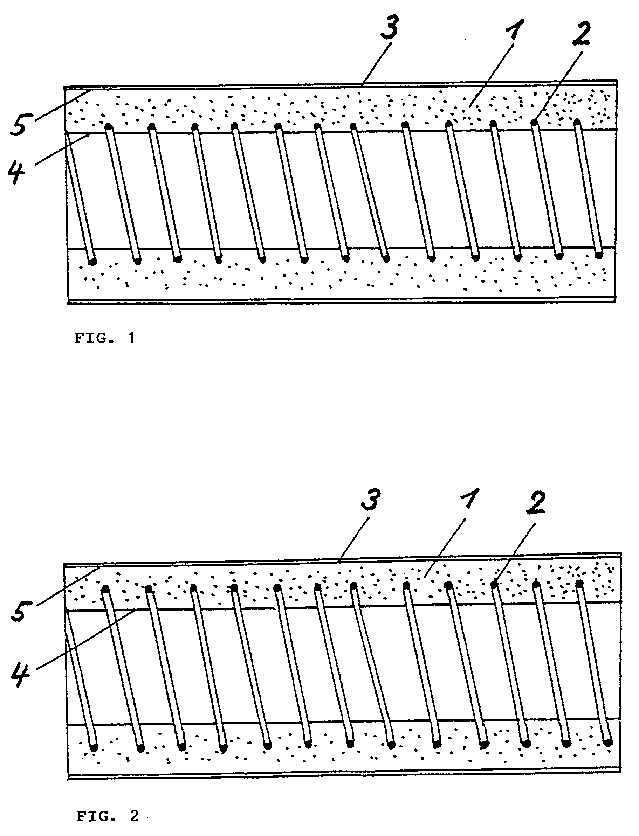

In Fig. 1 ist dargestellt, wie die Drahtwendel 2 derart in die Schaumstoffhülle 1 eingeschmolzen ist, daß die Drahtwendel 2 sich unmittelbar hinter der Innenwandung 4 der Schaumstoffhülle 1 befindet. Die Außenfläche 5 der Schaumstoffhülle 1 ist von einer Außenhaut 3 eingefaßt.

In Fig. 2 ist die Drahtwendel 2 so weit in das Material der Schaumstoffhülle 1 eingeschmolzen, daß sich die Drahtwendel 2 etwa in der Mitte zwischen der Innenwandung 4 und der Außenfläche 5 der Schaumstoffhülle 1 befindet. Diese zweite Ausführungsform weist ebenso wie die erste Ausführungsform eine Außenhaut 3 auf, die die Schaumstoffhülle 1 einfaßt.

Die Schaumstoffhülle 1 ist bei beiden Ausführungsformen gemäß den Fig. 1 und 2 aus einem schallabsorbierenden Schaumstoff gefertigt, z.B. aus Polyurethanschaum. Die Außenhaut 3 ist sowohl luft- als auch wasserdicht und schützt den Schaumstoffschlauch zusätzlich vor Marderbiß. Die Außenhaut 3 kann beispielsweise aus PUR-Folie hergestellt sein.

## Patentansprüche

1. Schaumstoffschlauch mit einer Schaumstoffhülle (1) und einer in diese zur Verstärkung eingesetzten Drahtwendel (2),
dadurch **gekennzeichnet,** daß die Drahtwendel (2) in das Material der Schaumstoffhülle (1) eingeschmolzen ist.

2. Schaumstoffschlauch nach Anspruch 1, dadurch gekennzeichnet, daß die Drahtwendel (2) unmittelbar hinter der Innenwandung (4) der Schaumstoffhülle (1) angeordnet ist.

3. Schaumstoffschlauch nach Anspruch 1, dadurch gekennzeichnet, daß die Drahtwendel (2) etwa in der Mitte zwischen der Innenwandung (4) und der Außenfläche (5) der Schaumstoffhülle (1) angeordnet ist.

4. Schaumstoffschlauch nach einem der Ansprüche 1 bis 3, dadurch gekennzeichnet, daß die Drahtwendel (2) aus Stahldraht besteht.

5. Schaumstoffschlauch nach einem der Ansprüche 1 bis 4, dadurch gekennzeichnet, daß die Außenfläche (5) der Schaumstoffhülle (1) von einer Außenhaut (3) eingefaßt ist.
